# EUROPEAN PATENT SPECIFICATION

(11) **EP 3 476 195 B1**
(45) Date of publication and mention of the grant of the patent: **25.05.2022**
(21) Application number: 18201706.1
(22) Date of filing: 22.10.2018
(51) Int. Cl.: A01D 34/28, A01D 34/66, A01D 34/24, A01D 34/74

(54) **LAWN MOWER**
RASENMÄHER
TONDEUSE À GAZON

(30) Priority: 31.10.2017 JP 2017210993
(43) Date of publication of application: 01.05.2019
(73) Proprietor: Iseki & Co., Ltd., Matsuyama-shi, Ehime 799-2692 (JP)
(72) Inventor: BABA, Yusuke, Iyo-gun, Ehime 791-2193 (JP); TODA, Hirotaka, Iyo-gun, Ehime 791-2193 (JP)
(74) Representative: TBK

(56) References cited:
- EP-A1- 2 842 405
- US-A1- 2007 051 082
- US-B1- 7 197 863
- US-B2- 7 059 109

## Description

The present invention relates to a lawn mower according to the preamble of claim 1, the features of which are known from e.g. document EP 2 842 405 A1.

Conventionally, there is a lawn mower in which a mower unit is provided on the lower side of a running vehicle body having a driver's seat. Such a lawn mower has adjustment dials disposed on the left and right sides of the driver's seat and connected to the mower unit by a link mechanism, and an operator can adjust the mowing height by turning the adjustment dials (for example, see document JP 2012-178983 A).

### Technical Problem

However, in the conventional lawn mower as described above, a relatively large link mechanism is necessary for holding the mower deck in a horizontal position, which will increase costs.

It is the object of the present invention, to provide a lawn mower capable of maintaining the position of the mower deck relative to the ground even when the mowing height is adjusted with an inexpensive and compact configuration.

The object of the invention is achieved by a lawn mower according to claim 1. Advantageous embodiments are carried out according the dependent claims.

A lawn mower (100) according to a first aspect of the invention includes a deck part (2), a front wheel part (4), a first arm part (5), a second arm part (8), and a lifting arm (11). A mowing mechanism (3) for cutting grass is provided on the deck part (2). The front wheel part (4) is provided in front of the deck part. The first arm part (5) is connected to the front wheel part (4) at its front end side and connected to the deck part (2) at a first link pivot (7) behind the front end. The first arm part (5) is provided so as to be swingable about the first link pivot (7). The second arm part (8) has a front end side located behind the first link pivot (7) and pivotably connected to a rear end side of the first arm
part (5) and is connected to the deck part (2) at a second link pivot (10) behind the front end side. The second arm part (8) swings in conjunction with the swing of the first arm part (5). The lifting arm (11) is pivotably connected to the second arm part (8) behind the second link pivot (10) and connected to the deck part (2). The lifting arm (11) raises and lowers the deck part (2).

According to a second aspect of the invention, the lawn mower (100) according to the first aspect of the invention further includes an adjustment part (6) configured to adjust the swinging angle of the first arm part (5), in which the adjustment part (6) includes an eccentric cam (61) provided so as to be pivotable with respect to the deck part (2), and the first arm part (5) has a contact part (5b) configured to fix the swinging angle by coming into contact with the eccentric cam (61).

According to a third aspect of the invention, in the lawn mower (100) according to the first or second aspect of the invention, a pair of the first arm parts and a pair of the adjustment parts (6) are provided, and the pair of adjustment parts (6) adjust the swinging angle of one first arm part (5) of the pair of first arm parts (5) and adjust the swinging angle of the other first arm part (5) in conjunction therewith.

In the lawn mower (100) according to the first aspect of the invention, the position of the mower deck relative to the ground can be maintained with an inexpensive and compact configuration.

The lawn mower (100) according to the second aspect of the invention makes it possible to adjust the mowing height of the mower deck with an inexpensive and compact configuration.

In the lawn mower (100) according to the third aspect of the invention, the swinging angles of the pair of first arm parts (5) can be simultaneously changed only by operating one of the adjustment parts (6).

### Brief Description of Drawings

FIG. 1 is a view showing a lawn mower according to an embodiment;
FIG. 2 is a perspective view of a mower unit according to the embodiment;
FIG. 3 is a side view of the mower unit according to the embodiment;
FIG. 4 is a side view of the mower unit according to the embodiment;
FIG. 5 is a view showing a mowing height adjustment mechanism according to the embodiment;
FIG. 6 is a view showing the mowing height adjustment mechanism according to the embodiment; and
FIG. 7 is a top view of the mower unit according to the embodiment.

### Description of Embodiments

Hereinafter, an embodiment of a lawn mower according to the present invention will be described in detail with reference to the accompanying drawings. It will be understood that the following embodiment is not intended to limit the present invention.

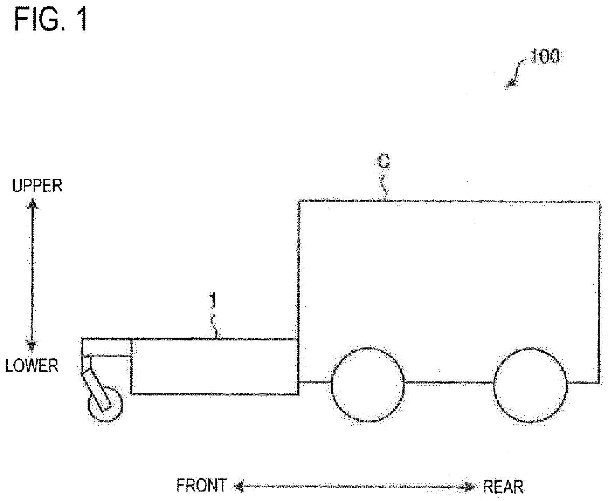

First, the overall configuration of a lawn mower 100 according to an embodiment will be described with reference to FIG. 1. FIG. 1 is a view showing the lawn mower 100 according to the embodiment. Meanwhile, in FIG. 1, the lawn mower 100 is schematically shown. Further, in the following description, a front and rear direction, a left and right direction, and an upper and lower direction of the lawn mower 100 will be described as a front and rear direction, a left and right direction, and an upper and lower direction at each part.

As shown in FIG. 1, the lawn mower 100 according to the embodiment includes a running vehicle body C and a mower unit 1. The running vehicle body C is, for example, a vehicle that is steered by an operator or the like. For example, the running vehicle body C raises and lowers the mower unit 1 by a lifting arm (not shown) or supplies power to a mowing mechanism of the mower unit 1. Further, the running vehicle body C includes a collector (not shown) and accommodates the grass cut by the mower unit 1.

The mower unit 1 is a device which is provided on the lower side of the front portion of the running vehicle body C and cuts the grass by a mowing mechanism having a mowing blade rotating around an axis extending in an upper and lower direction, for example. Meanwhile, although the mower unit 1 is provided in front of the running vehicle body C, the mower unit 1 may be provided behind the running vehicle body C or on the left and right sides thereof.

Here, in conventional lawn mowers, when connecting a mowing height adjustment mechanism of a mower unit to a running vehicle body, it is necessary to connect an adjustment member such as an adjustment dial provided near a driver's seat and a mowing height adjustment mechanism by a link mechanism. Therefore, a relatively large link mechanism is required when attempting to connect from the lower side of the running vehicle body to the driver's seat by a link mechanism, and the cost increases accordingly.

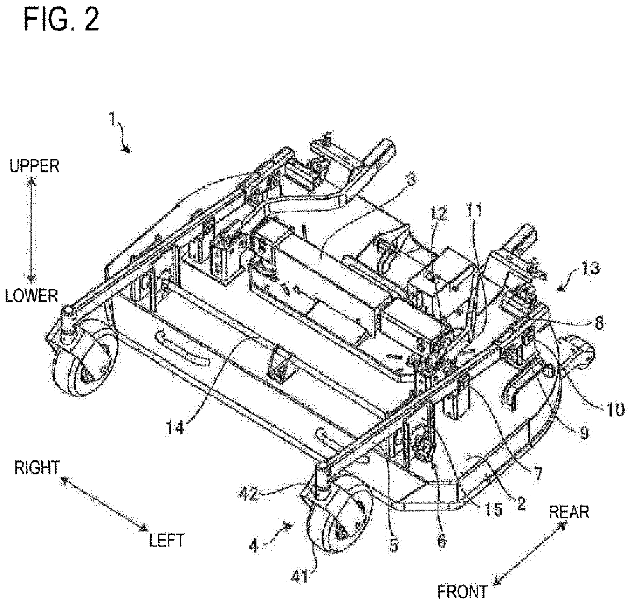

Therefore, in the lawn mower 100 according to the embodiment, mowing height adjustment mechanisms 6 (see FIG. 2) are connected to lifting arms 11 of the mower unit 1. That is, while the conventional lawn mower requires a link mechanism for connecting to a driver's seat, in the lawn mower 100 according to the embodiment, the mowing height adjustment mechanisms 6 are connected to the lifting arms 11 having a relatively short distance therefrom, and hence, a large link mechanism is not required. Therefore, in the lawn mower 100 according to the embodiment, the required link mechanism can be made small, so that the mowing height can be adjusted with an inexpensive and compact configuration.

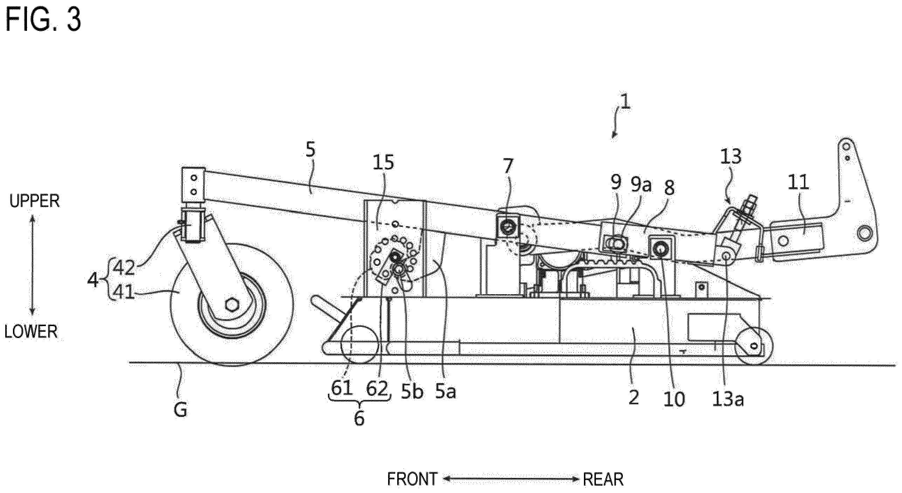

Subsequently, the mower unit 1 will be described in detail with reference to FIGS. 2 to 7. FIG. 2 is a perspective view of the mower unit 1 according to the embodiment. As shown in FIG. 2, the mower unit 1 includes a deck part 2, a mowing mechanism 3, front wheel parts 4, first arm parts 5, the mowing height adjustment mechanisms 6 (an example of the adjustment part), second arm parts 8, and the lifting arms 11. The mower unit 1 adjusts the height (i.e., the mowing height) of the deck part 2 from a ground G, depending on the difference in ground contact angle of the front wheel part 4 from the ground G (see FIG. 3) .

In the deck part 2, a mowing blade of the mowing mechanism 3 is accommodated on the lower side of a top surface, and a power part of the mowing mechanism 3, the first arm parts 5, the mowing height adjustment mechanisms 6, the second arm parts 8, and the lifting arms 11 and the like are disposed on the upper side of the top surface in a state of being exposed to the outside.

The mowing mechanism 3 includes a power such as a motor, for example. As the motor is operated by a power source supplied from the running vehicle body C, the mowing blade rotates and cuts the grass.

The front wheel part 4 is provided on the front side of the deck part 2. An auxiliary wheel 41 comes into contact with the ground at the time of cutting the grass, thereby supporting the first arm part 5 (to be described later). Further, the front wheel part 4 includes a pivot mechanism 42 in which a pivot shaft extending in the upper and lower direction is pivotably provided. The pivot mechanism 42 is connected to the auxiliary wheel 41 and pivoted following the running in the running direction of the running vehicle body C, thereby directing the direction of the auxiliary wheel 41 toward the running direction.

In the first arm part 5, one end (front end side) on the front side is connected to the front wheel part 4 and the other end (rear end side) on the rear side is connected to the second arm part 8. Further, the first arm part 5 swings with respect to the deck part 2 by a first link pivot 7 having a swing axis extending in the left and right direction of the running vehicle body C.

Specifically, the first link pivot 7 is disposed between the front wheel part 4 and the second arm part 8 and closer to the side of the second arm part 8. More specifically, the first link pivot 7 is disposed at the front side from the central portion in the front and rear direction of the deck part 2.

Further, the first arm part 5 includes an extension portion 5a extending downward between the mowing height adjustment mechanism 6 and the first link pivot 7, and a contact pin 5b provided at a leading end of the extension portion 5a. In a state where the front wheel part 4 is in contact with the ground G, the contact pin 5b is in contact with an eccentric cam 61 of the mowing height adjustment mechanism 6 (to be described later).

Further, the first arm part 5 is sandwiched between a pair of plate-like members 15 on the left and right sides in the mowing height adjustment mechanism 6. The plate-like members 15 are fixed to the deck part 2. Meanwhile, the plate-like members 15 are provided at positions to sandwich the eccentric cam 61 of the mowing height adjustment mechanism 6, which will be described later.

The mowing height adjustment mechanism 6 adjusts a swinging angle of the first arm part 5. Specifically, the mowing height adjustment mechanism 6 is disposed between the front wheel part 4 and the second arm part 8 and closer to the side of the front wheel part 4. The mowing height adjustment mechanism 6 comes into contact with the contact pin 5b of the first arm part 5 to fix the swinging angle of the first arm part 5. Details of the mowing height adjustment mechanism 6 will be described later with reference to FIGS. 3 to 6.

The second arm part 8 is disposed on a rear extension line in the front and rear direction of the first arm part 5. Specifically, the front end side of the second arm part 8 is connected to the rear end side of the first arm part 5 at a pivotal connection portion 9.

Further, the second arm part 8 is pivotably connected to the deck part 2 at a second link pivot 10 behind its front end side. Further, the second arm part 8 is connected to the lifting arm 11 such that its rear end side is pivotable around the left and right direction as a pivot axis. In this way, the second arm part 8 swings in conjunction with the swing of the first arm part 5.

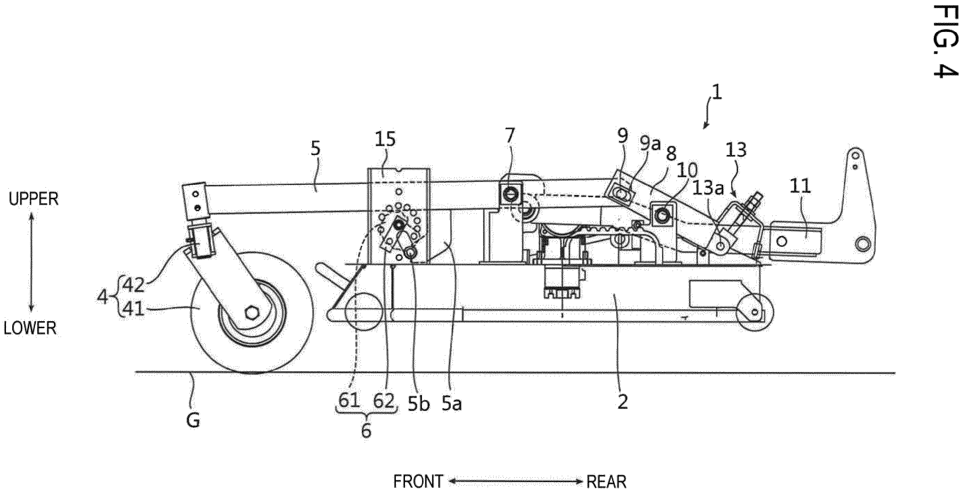

Further, the pivotal connection portion 9 connects the first arm part 5 and the second arm part 8 by inserting a pin or the like into an elongated hole 9a (see FIGS. 3 and 4). In this way, the first arm part 5 and the second arm part 8 can be interlocked with each other without providing a separate link mechanism in the pivotal connection portion 9.

The lifting arm 11 is connected to the running vehicle body C and raises and lowers the deck part 2 by power supplied from the running vehicle body C. Specifically, the lifting arm 11 has a front end portion 12 pivotably connected to the deck part 2 and is pivotably connected to the second arm part 8 via a horizontal mechanism 13 on the rear side. In this manner, the deck part 2 is raised and lowered according to the lifting and lowering of the lifting arm 11.

Further, when the lifting arm 11 is lifted, the front side of the deck part 2 is raised and the front wheel part 4 is separated from the ground G. At this time, the first arm part 5 and the second arm part 8 are in such a posture that they protrude upward at the pivotal connection portion 9, and the contact pin 5b of the first arm part 5 is separated from the mowing height adjustment mechanism 6 (the eccentric cam 61).

On the other hand, when the lifting arm 11 is lowered from such state, first, the front wheel part 4 comes into contact with the ground G. Then, at the same time that the front wheel part 4 comes into contact with the ground G, the convex shape of the first arm part 5 and the second arm part 8 becomes gentle, and the contact pin 5b of the first arm part 5 approaches the mowing height adjustment mechanism 6.

Further, when the contact pin 5b comes into contact with the mowing height adjustment mechanism 6, the swinging angle of the first arm part 5 is fixed, and as a result, the height of the deck part 2 is fixed. Further, when the lifting arm 11 is further lowered after the height of the deck part 2 is fixed, each of the horizontal mechanism 13 and the front end portion 12 of the lifting arm 11 is pivoted to release the energy generated in the deck part 2 due to the lowering. At this time, when the horizontal mechanism 13 is a screw type, the angle of the deck part 2 to the ground G is determined by the fastening degree of the screw.

Specifically, the horizontal mechanism 13 is configured by, for example, a screw type rod or the like and adjusts the angle of the deck part 2 to the ground G at the time of cutting grass. Specifically, the horizontal mechanism 13 adjusts the gap between the lifting arm 11 and the second arm part 8 by the fastening degree of the screw. For example, as the screw is tightened, the gap between the lifting arm 11 and the second arm part 8 becomes narrower. As a result, the position on the rear side of the deck part 2 is separated from the ground G and the height of the deck part 2 becomes high.

On the other hand, as the screw is released, the gap between the lifting arm 11 and the second arm part 8 is widened. As a result, the position on the rear side of the deck part 2 becomes close to the ground G, and the height of the deck part 2 becomes low. In this way, an operator can easily adjust the deck part 2 to an arbitrary height by adopting the screw type horizontal mechanism 13. Therefore, for example, the double cutting load can be also prevented by making the deck part 2 parallel to the ground G or by making the rear side of the deck part 2 higher than the front side when cutting a place (long grass, etc.) with a large load.

Next, the mower unit 1 will be further described with reference to FIGS. 3 and 4. FIGS. 3 and 4 are side views of the mower unit 1 according to the embodiment. FIG. 3 shows a case where the deck part 2 and the ground G are closest to each other (the mowing height is the lowest), and FIG. 4 shows a case where the deck part 2 and the ground G are farthest from each other (the mowing height is the highest).

First, the mower unit 1 when the mowing height is the lowest will be described with reference to FIG. 3. As shown in FIG. 3, when the mowing height is the lowest, the gap between the deck part 2 and the ground G is smallest. Specifically, the angle of the first arm part 5 to the ground G is the largest. In the example shown in FIG. 3, the front end side of the first arm part 5 becomes highest in the upper and lower direction. In other words, the swinging angle of the first arm part 5 to the deck part 2 is the maximum.

Further, as shown in FIG. 3, the second arm part 8 is in a linear (substantially parallel) posture with respect to the first arm part 5. Specifically, the angle (on the lower side) formed by the second arm part 8 and the first arm part 5 at the pivotal connection portion 9 is the minimum (zero in FIG. 3). That is, in the mower unit 1, the angle on the lower side formed by the first arm part 5 and the second arm part 8 is the minimum when the swinging angle of the first arm part 5 is the maximum.

Subsequently, the mower unit 1 when the mowing height is the highest will be described with reference to FIG. 4. As shown in FIG. 4, when the mowing height is the highest, the gap between the deck part 2 and the ground G is the largest. Specifically, the angle of the first arm part 5 to the ground G is the smallest. In the example shown in FIG. 4, the front end side of the first arm part 5 is the lowest in the upper and lower direction. In other words, the swinging angle of the first arm part 5 is the minimum.

Further, as shown in FIG. 4, the second arm part 8 takes an upwardly convex posture with respect to the first arm part 5. Specifically, the angle (on the lower side) formed by the second arm part 8 and the first arm part 5 at the pivotal connection portion 9 is the maximum. That is, in the mower unit 1, the angle on the lower side formed by the first arm part 5 and the second arm part 8 is the maximum when the swinging angle of the first arm part 5 is the smallest.

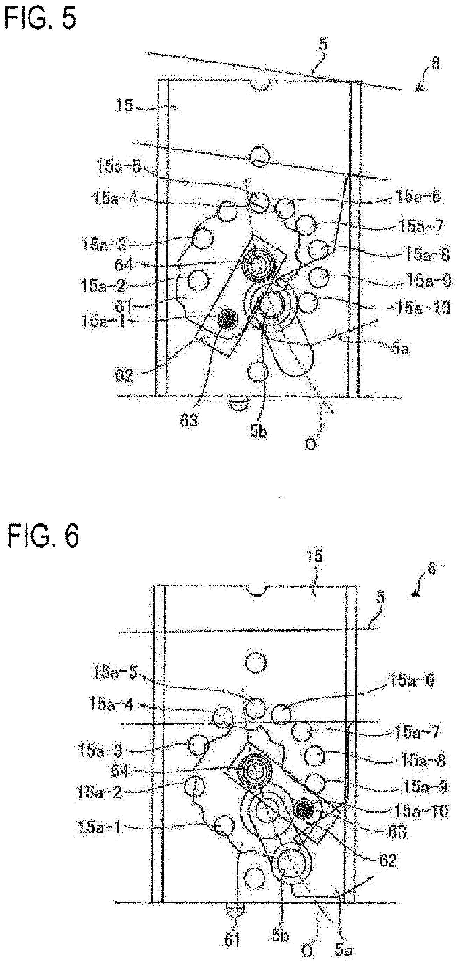

Next, details of the mowing height adjustment mechanism 6 will be described with reference to FIGS. 5 and 6. FIGS. 5 and 6 are views showing the mowing height adjustment mechanism 6 according to the embodiment. FIG. 5 shows a case where the swinging angle of the first arm part 5 is the maximum, and FIG. 6 shows a case where the swinging angle of the first arm part 5 is the minimum.

As shown in FIGS. 5 and 6, the mowing height adjustment mechanism 6 includes the eccentric cam 61, a connection portion 62, and a stopper pin 63. The eccentric cam 61 is sandwiched between the pair of plate-like members 15 and is provided so as to be pivotable about a rotation shaft 64. Further, a peripheral portion of the eccentric cam 61 has an irregular shape, and the contact pin 5b is engaged with a concave portion of the irregular shape.

The connection portion 62 connects the eccentric cam 61 and the stopper pin 63. The connection portion 62 is disposed on the outer side of the plate-like members 15 in the left and right direction. When the stopper pin 63 is pivoted by an operator, the rotation shaft 64 is pivoted, and the eccentric cam 61 is pivoted in conjunction with the pivoting of the rotation shaft 64.

The stopper pin 63 is a member for fixing or releasing the pivot position of the eccentric cam 61 by being inserted into or removed from adjustment holes 15a-1 to 15a-10 of the plate-like members 15. Specifically, the stopper pin 63 is provided so as to be able to reciprocate in the left and right direction of the running vehicle body C and fixes or releases the pivot position by reciprocating.

More specifically, the stopper pin 63 fixes the eccentric cam 61 by being inserted into any one of ten adjustment holes 15a-1 to 15a-10 provided in the plate-like members 15. Further, the number of the adjustment holes 15a-1 to 15a-10 of the plate-like members 15 corresponds to the number of the concave portions of the eccentric cam 61. That is, the number of the concave portions of the eccentric cam 61 shown in FIGS. 5 and 6 is ten.

Further, as described above, the first arm part 5 includes the extension portion 5a extending downward and the contact pin 5b provided at the leading end of the extension portion 5a. The contact pin 5b moves on an orbit O as the lifting arm is raised or lowered. For example, in the case where the front wheel part 4 is separated from the ground G at the position where the lifting arm 11 is raised to the maximum, the contact pin 5b does not contact with the eccentric cam 61 and is located at the lowest position (the position of the contact pin 5b in FIG. 5).

On the other hand, in the case where the auxiliary wheel 41 of the front wheel part 4 is in contact with the ground G at the position where the lifting arm 11 is lowered to the maximum, the contact pin 5b moves upward on the orbit O according to the lowering amount of the lifting arm 11 and is engaged with the concave portion of the eccentric cam 61. In this way, since the contact pin 5b is locked by the eccentric cam 61 even when the lifting arm 11 is further lowered, the swinging angle of the first arm part 5 is fixed.

That is, in FIG. 5, the contact position between the eccentric cam 61 and the contact pin 5b is closest to the rotation shaft 64, so that the swinging angle of the first arm part 5 is the maximum. In FIG. 6, the contact position between the eccentric cam 61 and the contact pin 5b is farthest from the rotation shaft 64, so that the swinging angle of the first arm part 5 is the minimum (the first arm part 5 is substantially parallel to the ground G) .

Further, as shown in FIGS. 5 and 6, the orbit 0 of the contact pin 5b passes through the rotation shaft 64. In this manner, it is possible to prevent a force from being applied to the eccentric cam 61 in the pivot direction due to the pressing force of the contact pin 5b. As a result, the stopper pin 63 can be easily replaced.

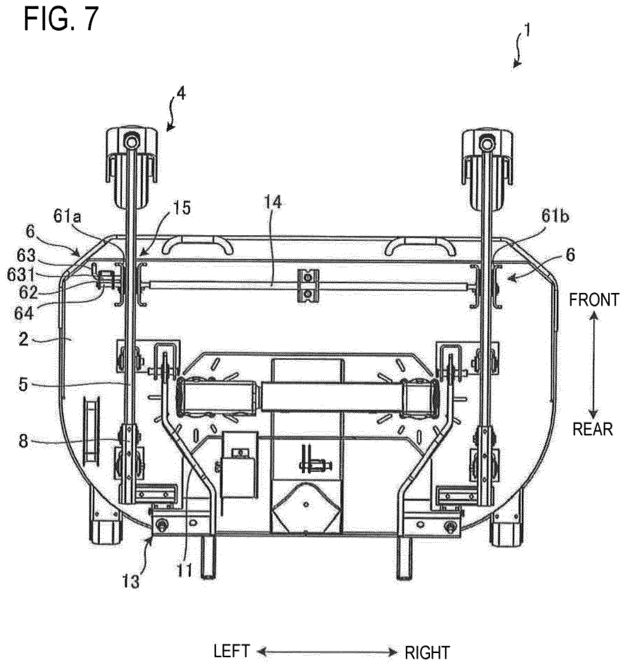

Next, a top view of the mower unit 1 according to the embodiment will be described with reference to FIG. 7. FIG. 7 is a top view of the mower unit 1 according to the embodiment. As shown in FIG. 7, in the mower unit 1, the front wheel part 4, the first arm parts 5, the mowing height adjustment mechanisms 6, the second arm parts 8, and the lifting arms 11 and the like are provided in pairs on the right and left.

Further, the pair of mowing height adjustment mechanisms 6 adjust the swinging angle of one first arm part 5 of the pair of first arm parts 5 and also adjust the swinging angle of the other first arm part 5 in conjunction therewith. In the example shown in FIG. 7, an eccentric cam 61a, a connection portion 62, and a stopper pin 63 are provided in the left mowing height adjustment mechanism 6, and only an eccentric cam 61b is provided in the right mowing height adjustment mechanism 6.

Further, the pair of eccentric cams 61a, 61b are connected by the rotation shaft 64. In other words, the rotation shaft 64 is an interlocking shaft for interlocking the eccentric cam 61a and the eccentric cam 61b. That is, when an operator changes the pivot position of the eccentric cam 61a by operating the left stopper pin 63, the pivot position of the eccentric cam 61b is also changed at the same time by the rotation shaft 64 which is an interlocking shaft.

In this way, an operator can simultaneously operate the left and right eccentric cams 61a, 61b at one location, so that work efficiency can be improved.

Furthermore, the stopper pin 63 is provided on the left surface (may be the right surface) of the mower unit 1. In this way, it is possible to adjust the mowing height in the shortest distance after an operator gets off the driver's seat.

Further, a cover 14 for protecting the rotation shaft 64 is provided between the pair of mowing height adjustment mechanisms 6. In this way, it is possible to prevent the occurrence of deformation of the rotation shaft 64 due to the contact with the outside entrainment of a cloth of an operator due to the rotation of the rotation shaft 64 or the like. Therefore, the deck part 2 can be used as a step stand or a luggage placement.

Further, the pair of plate-like members 15 are provided so as to sandwich the first arm part 5 on each of the left and right sides. Each of the pair of plate-like members 15 has a U shape (or any other shape like U-letter) whose both ends are away from the first arm part 5 in the left and right direction. In this way, the rigidity of the plate-like member 15 in the left and right direction can be improved.

Furthermore, as described above, the plate-like members 15 are fixed to the deck part 2. Therefore, the shaking of the deck part 2 at the time of cutting grass can be absorbed by the first arm part 5 by disposing the plate-like members 15 so as to sandwich the first arm part 5, so that the cut traces can be cleanly finished.

Further, as shown in FIG. 7, two eccentric cams 61a, 61b are provided so as to sandwich the first arm parts 5, respectively. Furthermore, the two eccentric cams 61a, 61b are disposed so as to partially sandwich the contact pins 5b (see FIG. 5). In this way, the deviation due to the swinging in the left and right direction during the pivoting or the like can be eliminated, so that the cut traces can be cleanly finished.

Further, as shown in FIG. 7, the stopper pin 63 has a protruding portion protruding to the left side (the right side when the stopper pin 63 is disposed on the right side). As the protruding portion moves in the left and right direction, the pivot position of the eccentric cam 61 is fixed or released. In the example shown in FIG. 7, when an operator straightly pulls the protruding portion of the stopper pin 63 to the left side, the fixation of the pivot position is released. On the other hand, when the protruding portion is straightly pushed to the right side and inserted into any one of the adjustment holes 15a-1 to 15a-10 (see FIGS. 5) in a state where the fixation of the pivot position is released, the pivot position is fixed.

Furthermore, as shown in FIG. 7, the protruding portion has an L shape by being bent in the front and rear direction. In this way, an operator can hook a finger or the like to the bent portion and pull it, so that the stopper pin 63 can be easily inserted and removed.

Further, as shown in FIG. 7, in the mowing height adjustment mechanism 6, for example, an elastic member 631 such as a spring is provided inside the U-shaped connection portion 62. Specifically, the elastic member 631 is provided in the connection portion 62 in a state of being mounted on the stopper pin 63. In this way, the stopper pin 63 always receives the force of the elastic member 631 in the inserting direction (right direction in FIG. 7), so that it is possible to prevent the stopper pin 63 from coming off due to vibrations or the like during running.

Next, the effects of the lawn mower 100 according to the embodiment will be described.

The lawn mower 100 according to the embodiment includes the running vehicle body C and the mower unit 1 provided in the running vehicle body C. The mower unit 1 includes the deck part 2, the front wheel part 4, the first arm part 5, the second arm part 8, the lifting arm 11, the mowing height adjustment mechanism 6 (an example of the adjustment part). The mowing mechanism 3 for cutting grass is provided on the deck part 2. The front wheel part 4 is provided in front of the deck part 2. The first arm part 5 is connected to the front wheel part 4 at its front end side and connected to the deck part 2 at the first link pivot 7 behind the front end. The first arm part 5 is provided so as to be swingable about the first link pivot 7. In this way, a large link mechanism is not required to adjust the mowing height, so that it is possible to adjust the mowing height with an inexpensive and compact configuration.

Further, in the lawn mower 100 according to the embodiment, the mowing height adjustment mechanism 6 includes the eccentric cam 61 provided so as to be pivotable with respect to the deck part 2 and the stopper pin 63 fixing the pivot position of the eccentric cam 61. Further, the first arm part 5 includes the contact pin 5b which comes into contact with the eccentric cam 61 in a state fixed by the stopper pin 63 to fix the swinging angle. In this way, the mowing height adjustment mechanism 6 having a simple and compact configuration can be made.

Further, in the lawn mower 100 according to the embodiment, the protruding portion of the stopper pin 63 protruding in the left and right direction of the running vehicle body C moves in the left and right direction, thereby fixing or releasing the pivot position. In this way, the mowing height can be adjusted on the side surface of the mower unit 1 and the distance to the mowing height adjustment mechanism 6 after an operator gets off the driver's seat can be made relatively short, so that the workability can be improved.

Further, in the lawn mower 100 according to the embodiment, the first arm part 5 and the mowing height adjustment mechanism 6 are provided in pairs on the left and right with respect to the front and rear direction of the running vehicle body C. The pair of mowing height adjustment mechanisms 6 adjust the swinging angle of one first arm part 5 of the pair of first arm parts 5 and also adjust the swinging angle of the other first arm part 5 in conjunction therewith. In this way, the swinging angles of the first arm parts 5 on the left and right sides can be simultaneously changed just by operating one of the mowing height adjustment mechanisms 6.

Further, in the lawn mower 100 according to the embodiment, the angle (on the lower side) formed by the first arm part 5 and the second arm part 8 is the minimum when the swinging angle of the first arm part 5 is the maximum, and the angle formed by the first arm part 5 and the second arm part 8 is the maximum when the swinging angle of the first arm part 5 is the minimum. In this way, the first arm part 5 and the second arm part 8 are not reversely folded (the angle on the lower is 180° or less), so that it is possible to reduce the occurrence of troubles (such as that the mowing height is not matched) caused by the reverse folding, for example.

Further effects and modifications can be easily derived by those skilled in the art. Therefore, the broader aspects of the present invention are not limited to the specific details and representative embodiments as shown and described above. Various modifications can be made without departing from the scope of the invention as defined by the appended claims.

### Reference Signs List

- 1: Mower Unit
- 2: Deck Part
- 3: Mowing Mechanism
- 4: Front Wheel Part
- 5: First Arm Part
- 5a: Extension Portion
- 5b: Contact Part
- 6: Mowing Height Adjustment Mechanism
- 7: First Link Pivot
- 8: Second Arm Part
- 9: Pivotal Connection Portion
- 10: Second Link Pivot
- 11: Lifting Arm
- 12: Front End Portion
- 13: Horizontal Mechanism
- 14: Cover
- 15: Plate-like Member
- 61, 61a, 61b: Eccentric Cam
- 62: Connection Portion
- 63: Stopper Pin
- 64: Rotation Shaft
- 100: Lawn Mower
- C: Running Vehicle Body
- G: Ground
- O: Orbit

## Claims

1. A lawn mower comprising:
a deck part (2) on which a mowing mechanism (3) for cutting grass is provided;
a front wheel part (4) provided in front of the deck part (2);
a first arm part (5) connected to the front wheel part (4) at its front end side, connected to the deck part (2) at a first link pivot (7) behind the front end, and provided so as to be swingable about the first link pivot (7); and
a second arm part (8) that has a front end side located behind the first link pivot (7) and pivotably connected to a rear end side of the first arm part (5), and is connected to the deck part (2) at a second link pivot (10) behind the front end side, and configured to swing in conjunction with the swing of the first arm part (5);
**characterized by**
a lifting arm (11) pivotably connected to the second arm part (8) behind the second link pivot (10), connected to the deck part (2), and configured to raise and lower the deck part (2).

2. The lawn mower according to claim 1, further comprising an adjustment part (6) configured to adjust a swinging angle of the first arm part (5),
the adjustment part (6) comprising an eccentric cam (61) provided so as to be pivotable with respect to the deck part (2),
wherein the first arm part (5) has a contact part (5b) configured to fix the swinging angle by coming into contact with the eccentric cam (61).

3. The lawn mower according to claim 1 or 2,
wherein a pair of the first arm parts (5) and a pair of the adjustment parts (6) are provided, and
wherein the pair of adjustment parts (6) are configured to adjust a swinging angle of one first arm part (5) of the pair of first arm parts (5) and adjust the swinging angle of the other first arm part (5) in conjunction therewith.

## Patentansprüche

1. Rasenmäher mit:
einem Deckteil (2), auf dem ein Mähmechanismus (3) zum Schneiden von Gras vorgesehen ist;
einem Vorderradteil (4), das vor dem Deckteil (2) vorgesehen ist;
einem ersten Armteil (5), das mit dem Vorderradteil (4) an seiner vorderen Endseite verbunden ist, mit dem Deckteil (2) an einem ersten Gelenkzapfen (7) hinter dem vorderen Ende verbunden ist und so vorgesehen ist, dass es um den ersten Gelenkzapfen (7) schwenkbar ist; und
einem zweiten Armteil (8), das eine vordere Endseite aufweist, die hinter dem ersten Gelenkzapfen (7) angeordnet und schwenkbar mit einer hinteren Endseite des ersten Armteils (5) verbunden ist, und das mit dem Deckteil (2) an einem zweiten Gelenkzapfen (10) hinter der vorderen Endseite verbunden ist und so konfiguriert ist, dass es in Verbindung mit dem Schwingen des ersten Armteils (5) schwingt;
**gekennzeichnet durch**
einen Hebearm (11), der schwenkbar mit dem zweiten Armteil (8) hinter dem zweiten Gelenkzapfen (10) verbunden ist, der mit dem Deckteil (2) verbunden ist und der konfiguriert ist, das Deckteil (2) anzuheben und abzusenken.

2. Rasenmäher nach Anspruch 1, außerdem mit einem Einstellteil (6), das zum Einstellen eines Schwenkwinkels des ersten Armteils (5) konfiguriert ist,
wobei das Einstellteil (6) eine exzentrische Nocke (61) umfasst, die so vorgesehen ist, dass sie in Bezug auf das Deckteil (2) schwenkbar ist,
wobei das erste Armteil (5) ein Berührungsteil (5b) aufweist, das so konfiguriert ist, dass es den Schwenkwinkel fixiert, indem es mit dem exzentrischen Nocken (61) in Berührung gerät.

3. Rasenmäher nach Anspruch 1 oder 2,
wobei ein Paar der ersten Armteile (5) und ein Paar der Einstellteile (6) vorgesehen sind, und
wobei das Paar Einstellteile (6) konfiguriert ist, einen Schwenkwinkel eines ersten Armteils (5) des Paars erste Armteile (5) einzustellen und den Schwenkwinkel des anderen ersten Armteils (5) in Verbindung damit einzustellen.

## Revendications

1. Tondeuse à gazon comprenant :
une partie de plancher (2) sur laquelle est prévu un mécanisme de tonte (3) pour couper le gazon ;
une partie de roue avant (4) prévue en face de la partie de plancher (2)
une première partie de bras (5) raccordée à la partie de roue avant (4) au niveau de son côté d'extrémité avant, raccordée à la partie de plancher (2) au niveau d'un premier pivot de liaison (7) derrière l'extrémité avant, et prévue afin de pouvoir osciller autour du premier pivot de liaison (7) ; et
une seconde partie de bras (8) qui a un côté d'extrémité avant situé derrière le premier pivot de liaison (7) et raccordée de manière pivotante à un côté d'extrémité arrière de la première partie de bras (5) et est raccordée à la partie de plancher (2) au niveau d'un second pivot de liaison (10) derrière le côté d'extrémité avant, et configurée pour osciller conjointement avec l'oscillation de la première partie de bras (5) ;
**caractérisée par** :
un bras de levage (11) raccordé de manière pivotante à la seconde partie de bras (8) derrière le second pivot de liaison (10), raccordé à la partie de plancher (2), et configurée pour lever et abaisser la partie de plancher (2).

2. Tondeuse à gazon selon la revendication 1, comprenant en outre une partie d'ajustement (6) configurée pour ajuster un angle d'oscillation de la première partie de bras (5),
la partie d'ajustement (6) comprenant une came excentrique (61) prévue afin de pouvoir pivoter par rapport à la partie de plancher (2),
dans laquelle la première partie de bras (5) a une partie de contact (5b) configurée pour fixer l'angle d'oscillation en venant en contact avec la came excentrique (61).

3. Tondeuse à gazon selon la revendication 1 ou 2,
dans laquelle une paire de premières parties de bras (5) et une paire de parties d'ajustement (6) sont prévues, et
dans laquelle la paire de parties d'ajustement (6) est configurée pour ajuster un angle d'oscillation d'une première partie de bras (5) de la paire de premières parties de bras (5) et ajuster l'angle d'oscillation de l'autre première partie de bras (5) conjointement avec cette dernière.
